# EUROPEAN PATENT SPECIFICATION

(11) **EP 3 509 874 B1**
(45) Date of publication and mention of the grant of the patent: **07.10.2020**
(21) Application number: 17758189.9
(22) Date of filing: 30.08.2017
(51) Int. Cl.: B60C 19/00, B60C 11/03, B60C 3/06

(54) **TIRE WITH ASYMMETRIC SCULPTURE ELEMENTS AND OFF-CENTER NOISE DAMPERS**
REIFEN MIT ASYMMETRISCHEN SKULPTURELEMENTEN UND EXZENTRISCHEN GERÄUSCHDÄMPFERN
PNEUMATIQUE DOTÉ D'ÉLÉMENTS ASYMÉTRIQUES EN RELIEF ET AMORTISSEURS DE BRUIT EXCENTRÉS

(30) Priority: 07.09.2016 FR 1658287
(43) Date of publication of application: 17.07.2019
(73) Proprietor: Compagnie Générale des Etablissements Michelin, 63000 Clermont-Ferrand (FR)
(72) Inventor: GRECO, Mathieu, 63040 Clermont-Ferrand Cedex 9 (FR); NOTIN, Patrice, 63040 Clermont-Ferrand Cedex 9 (FR)
(74) Representative: Roussy, Delphine
(86) International application number: PCT/EP2017/071796
(87) International publication number: WO 2018/046376

(56) References cited:
- EP-A1- 1 577 123
- WO-A1-2015/111315
- US-A1- 2015 321 517

## Description

### TECHNICAL DOMAIN

The invention relates to a tire having a tread with asymmetric tread elements and at least one off-center noise damper for absorbing the resonance of air in the tire cavity.

### BACKGROUND

A tire comprises a summit with a tread for contacting the ground through a rolling surface. In a known manner, the tread of a tire, whether intended to equip a passenger vehicle or a heavy goods vehicle, is provided with a sculpture including, in particular, tread elements or elementary blocks delimited by various grooves, including primary, longitudinal or circumferential, transverse or even oblique grooves, the elementary blocks also being able to include various finer incisions or lamelles. The grooves form channels intended to evacuate water during rolling on wet surfaces.

Such tires are also provided with a sealed inner liner that defines a cavity of the tire when the tire is mounted on a mounting rim. During rolling, the vibrations of the air in the cavity generate phenomena of resonance, hereafter called "cavity resonance". These sound waves are transmitted to the interior of the vehicle. They are significant and unpleasant for the vehicle's passengers, inspiring various solutions for reducing their negative effect (see, for example, US Publ. No. 2015/321517 directed to a pneumatic tire having an asymmetrical tread pattern and a tread portion with short fibers fixed to at least a portion of a tire inner peripheral surface thereof).

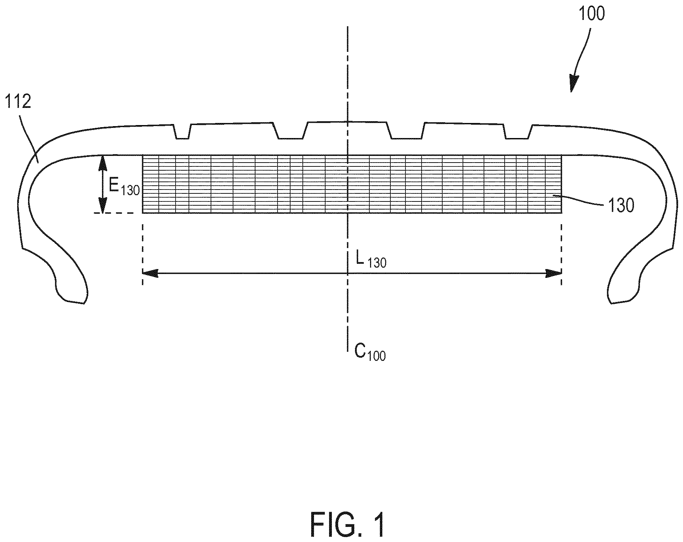

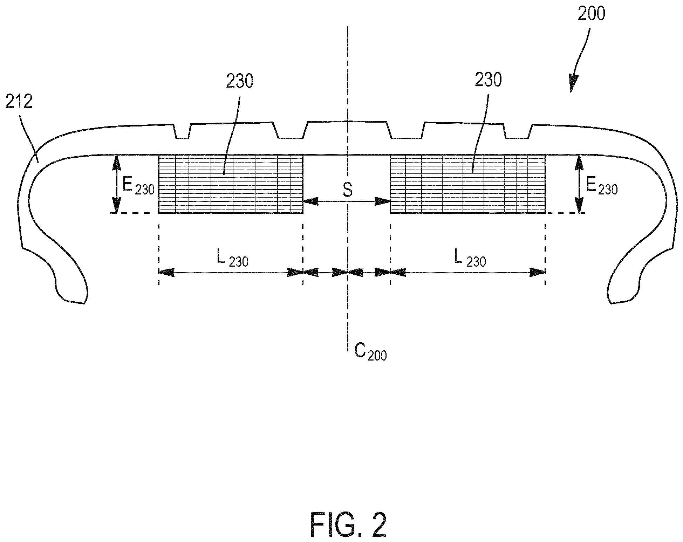

The introduction of a noise damper into the tire cavity (often attached to the inner liner) is known as an effective means of reducing the amplitude of these phenomena of resonance (see, for example, PCT publication WO 2015/111315 directed to a pneumatic tire with a sound-absorbing material affixed to a tire inner-surface region corresponding to a tread section). For example, the integration of a foam strip in order to absorb cavity resonance is commercially available as a single band version (as shown in Figure 1) and a two-band version centered under the summit (as shown in Figure 2).

A tire 100 of Figure 1 has a tread with sculpture elements that are asymmetrical with respect to the median plane C₁₀₀ of the tire 100. A foam strip 130 is circumferentially disposed inside the tire 100 with a predetermined thickness E₁₃₀ and a predetermined width L₁₃₀. The foam strip is positioned to ensure the symmetry of the foam with respect to the median plane C₁₀₀ of the tire 100.

A tire 200 of Figure 2 also has a tread with sculpture elements that are asymmetrical with respect to the median plane C₂₀₀ of the tire 200. Two foam strips 230 are circumferentially disposed inside the tire 200 with identical thicknesses E₂₃₀ and identical widths L₂₃₀. A space S between the two foam strips 230 ensures the symmetry of the foam strips with respect to the median plane C₂₀₀ of the tire 200. In some embodiments, each foam strip 230 is spaced 40 mm from the median plane C₂₀₀.

On very high-end vehicles with speed ratings (Y), manufacturers demand very high levels of performance. The foam strips have the particularity of being also thermal insulators which have the consequence of increasing the temperature inside the summit, which can lead to a lower performance on high-speed tests.

It is thus sought how to dampen the cavity resonance efficiently while maintaining excellent performance at high speed.

### SUMMARY

The invention relates to a tire for a vehicle. The tire includes a summit having a tread with asymmetric tread elements for contacting the ground, and the tire is provided with a sealed inner liner that defines a tire cavity when the tire is mounted on a rim. A first noise damper is circumferentially secured to an inner surface that faces the tire cavity. The first noise damper is positioned in the tire cavity to an outer side of the tire and is off-center relative to a median plane of the tire. A second noise damper is circumferentially affixed to the inner surface facing the cavity of the tire and positioned in the tire cavity towards an inner side of the tire, being off-center relative to a median plane of the tire. The second noise damper is affixed axially externally relative to the median plane of the tire. The center of gravity of the set of noise dampers is located toward the outer side of the tire. Each noise damper comprises a foam strip that is circumferentially affixed to the inner surface of the tire facing the cavity of the tire, and each foam strip has a continuous length, and each foam strip has a continuous width and a continuous thickness over the entire continuous length of the foam strip. The tread comprises a plurality of circumferential grooves, including primary grooves having respective widths, an inner groove closer to the inner side of the tire and having a width, and an outer groove closer to the outer side of the tire having a width; and the width of the inner groove and the width of the outer groove are different from each other and are also different from the widths of the primary grooves such that the tread has tread elements that are asymmetric with respect to the median plane of the tire. The first noise damper is disposed axially directly facing radially opposite the primary groove as well as the outer groove, and the second noise damper is disposed axially directly facing radially opposite the inner groove. An axially inner edge of the first damper coincides with a line passing through a point of intersection between a base and a wall of the primary groove.

According to one embodiment, the first noise damper is fixed axially externally relative to the median plane of the tire.

The invention also relates to a noise reduction system for tires, including a tire as described above.

### BRIEF DESCRIPTION OF THE DRAWINGS

The nature and various advantages of the presently disclosed invention will become more apparent upon consideration of the following detailed description, taken in conjunction with the accompanying drawings, in which like reference characters refer to like parts throughout, and in which:
FIGS. 1 and 2 represent meridian sectional views of tires according to the prior art and provided with known noise dampers.
FIG. 3 shows a schematic representation of tires intended to be mounted on wheel mounting rims of a vehicle.
FIG. 4 shows a meridian sectional view of a tire which does not form part of the invention.
FIG. 5 shows a meridian sectional view of another embodiment of a tire according to the invention.

### DETAILED DESCRIPTION OF THE DRAWINGS

Reference will now be made in detail to embodiments of the invention, one or more examples of which are illustrated in the drawings. Each example is provided by way of explanation and not limitation of the disclosed invention. Thus, it is intended that the invention covers these modifications and variants insofar as they fall within the scope of the appended claims.

For a tire having a geometry of revolution with respect to an axis of rotation, the geometry of the tire is generally described in a meridian plane containing the axis of rotation of the tire. For a given meridian plane, the radial, axial and circumferential directions respectively designate the directions perpendicular to the axis of rotation of the tire, parallel to the axis of rotation of the tire and perpendicular to the meridian plane.

As used herein, the term "pneumatic" includes, but is not limited to, tires used for light vehicles, passenger cars, utility vehicles (including heavy goods vehicles), recreational vehicles (including, without limitation, bicycles, motorcycles, ATVs, etc.), agricultural vehicles, military vehicles, industrial vehicles, mining vehicles and construction equipment.

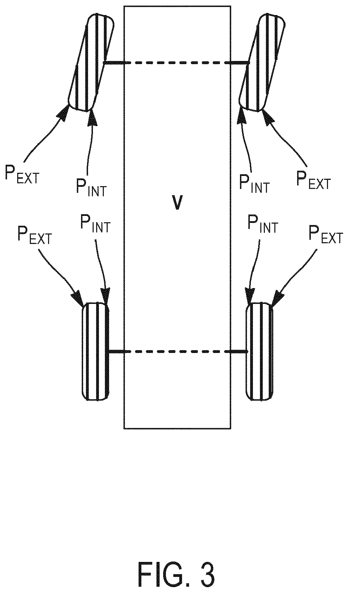

Referring now to the figures, in which the same numbers identify identical elements, Figure 3 schematically shows tires as they are intended to be mounted on wheel mounting rims of a vehicle V and having a predetermined mounting direction on the vehicle: an inner side of the tire P_{INT} corresponds to an inner axial side of the vehicle, and an outer side of the tire P_{EXT} corresponds to the outer axial side of the vehicle.

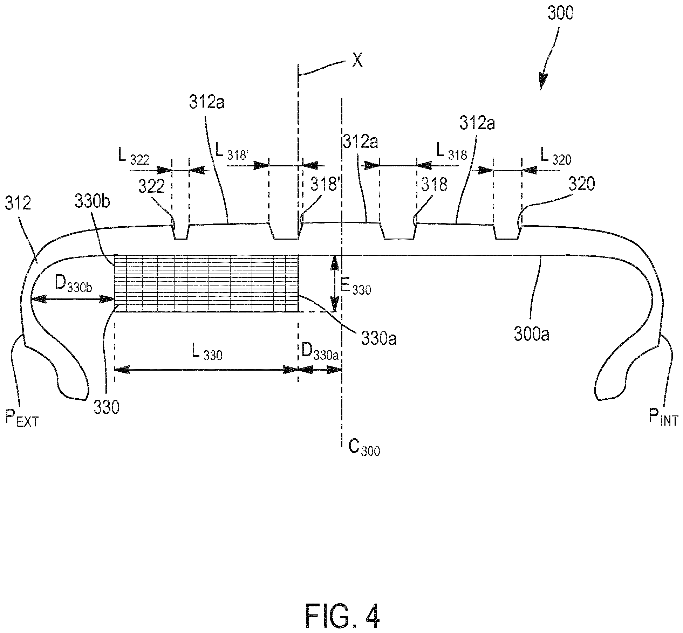

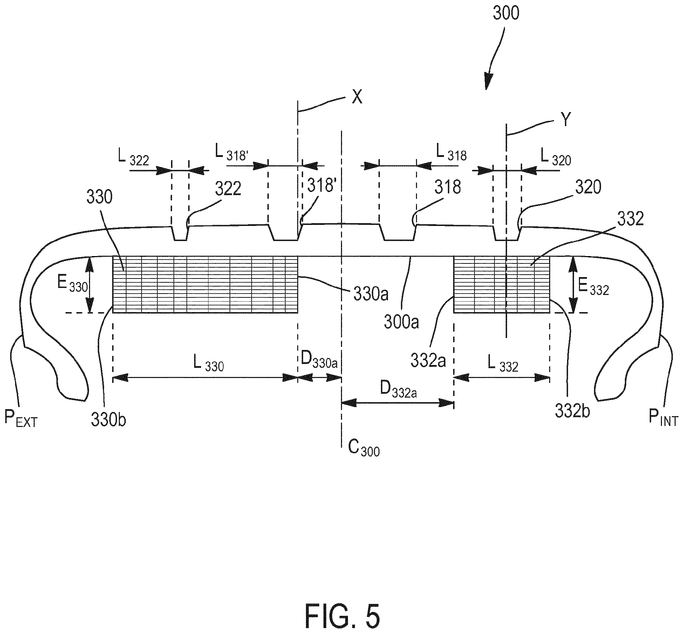

Figures 4 and 5 show two embodiments of the tire 300 having a tread 312 with asymmetric tread elements and at least one noise damper disposed with respect to the median plane C₃₀₀ of the tire 300 so that the center of gravity of the noise damper (or noise dampers) is off-center. Both embodiments attain the required performance. In embodiments using two or more noise dampers, the center of gravity of the set of noise dampers is located toward the outer side of the vehicle. These embodiments are particularly adapted to vehicles that impose negative camber upon the tires.

In the invention, the noise dampers are formed from known materials including sponge materials. The sponge materials can include foams, including foamed plastics and foam resins of foam rubbers (e.g., chloroprene rubber, ethylene propylene (EPDM) rubber, nitrile butadiene and their equivalents). A sponge that includes open cell foam resins (e.g., polyethylene and polyurethane) is an effective means of attenuating cavity resonance, in order to limit the weight of the tire and preserve the durability of the noise dampers.

Referring to Figure 4, the tire 300 includes a summit having a tread 312 with asymmetric tread elements (for example, as shown and described with respect to Figures 1 and 2). The tread 312 includes a plurality of blocks 312a and a plurality of circumferential grooves, including primary grooves 318, 318' having respective widths L₃₁₈, L_{318'}. The grooves also include an inner groove 320 closer to the inner side of the tire 300 and having a width L₃₂₀ and an outer groove 322 closer to the outer side of the tire 300 and having a width L₃₂₂. The width L₃₂₀ of the inner groove 320 and the width L₃₂₂ of the outer groove are different from each other and are also different from the widths L₃₁₈, L_{318'} of the primary grooves 318, 318'. As a result, the tread 312 has tread elements that are asymmetric with respect to the median plane C₃₀₀ of the tire 300. This asymmetric tread sculpture is exemplary and is not limited to four grooves (i.e., the asymmetric tread elements could include more grooves or fewer grooves). The asymmetric tread elements could include other known elements including lamelles (not shown).

The tire 300 has a first noise damper 330 for absorbing the cavity resonance of the tire. The noise damper 330 includes a foam strip having a continuous width L₃₃₀ and a continuous thickness E₃₃₀ along the entire length of the strip. The noise absorber 330 is circumferentially secured by known means to the inner surface 300a of the inner liner that faces the cavity of the tire 300.

The noise absorber 330 is off-center with respect to the median plane C₃₀₀ of the tire 300 by a predetermined distance D₃₃₀ₐ. This distance is measured with respect to an edge 330a of the first noise damper 330 that is closer to the median plane C₃₀₀. In some embodiments, the edge 330a coincides with a line X that passes through the point of intersection between a base and a wall of the groove 318'. With respect to the inner surface 300a, a predetermined distance D_{330b} is measured with respect to an opposite edge 330b of the first damper 330 that is closer to the outer side of the tire. The edges 330a, 330b together define the continuous width L₃₃₀ such that the first noise damper 330 is disposed axially directly facing radially opposite the primary groove 318' as well as the outer groove 322. Thus, the first noise damper 330 is positioned towards the outer side of the tire.

Referring to Figure 5, the tire 300 further includes, in addition to the first noise damper 330, a second noise damper 332. The second noise damper 332 is also circumferentially secured by known means to the inner surface 300a of the tire 300 that faces the cavity of the tire. The second noise damper 332 also includes a foam strip having a continuous width L₃₃₂ and a continuous thickness L₃₃₂ along the entire length of the tread.

The second noise damper 332 is off-center with respect to the median plane C₃₀₀ of the tire 300 by a predetermined distance D₃₃₂ₐ. This distance is measured with respect to an edge 332a of the second damper 332 that is closer to the median plane C₃₀₀. An opposite edge 332b of the second noise damper 332 is positioned closer to the inner side of the tire. The edges 332a, 332b together define the continuous width L₃₃₂ such that the second noise damper 332 is placed axially directly facing radially opposite the inner groove 320. In some embodiments, the second noise damper 332 is aligned along a line Y that passes through the center of gravity of the second noise damper and in the middle of the width L₃₂₀. By placing the second noise damper 332 facing radially of the inner groove 320, the heat produced by high speeds can be released through the bottom of the groove 320.

The dampers are preferably arranged axially internally relative to the lateral ends of the reinforcements of the summit block of the tire. Preferably, this distance is greater than 25 mm. This configuration limits the increase in temperature to the edge of the summit block.

### EXAMPLE:

A test was carried out on tires of size 275/35ZR21 103Y, asymmetric, tested with a camber angle of -1.5° in order to take into account the technical requirements of a vehicle to which it is specifically dedicated. The tires are intended to be mounted on wheel rims of the size 9.5J21.

The tires correspond to the embodiments as described:

| | |
|---|---|
| Ref. 1: | A tire without foam ("reference"). |
| Ref. 2: | The tire of Figure 1 with a circumferential foam strip having a width of 180 mm and a thickness of 30 mm. |
| Ref. 3: | The tire of Figure 2 with two circumferential foam strips with each foam strip having a width of 80 mm and a thickness of 30 mm. |
| Ref. 4: | The tire of Figure 4 with a circumferential foam strip having a width of 100 mm and a thickness of 30 mm. |
| Ref. 5: | The tire of Figure 4 with a circumferential foam strip having a width of 100 mm and a thickness of 50 mm. |
| Ref. 6: | The tire of Figure 5 with two circumferential foam strips including a first foam strip having a width of 100 mm and a thickness of 30 mm and a second foam strip having a width of 50 mm and a thickness of 30 mm. |

For tires using foam strips, the selected foam is an open-cell polyurethane foam. A commercial example of such a foam is Metzonor 023 from Metzeler Schaum GmbH. Its density is 23 kg / m3.

At an ambient temperature of 25 ° C, the test consists of rolling the tire on a metallic flywheel having a circumference of 8.5 m, at a pressure of 3.2 bar and a regulated load of 598 daN. The tire rolls in increments of increasing speeds, each lasting 20 minutes, and the increment in speed is 10 km/h. The tires are classified according to the maximum speed reached and the running time during the last stage reached. The results of the tests are given in Table 1.

**TABLE 1**

| | REF. 1 | REF. 2 | REF. 3 | REF. 4 | REF. 5 | REF. 6 |
|---|---|---|---|---|---|---|
| Number of foam pieces | 0 | 1 | 2 | 1 | 1 | 2 |
| Number of foam pieces (asymmetric) | 0 | 0 | 0 | 1 | 1 | 2 |
| Rolling time: speed (km/h) | 10':330 | 8,8':300 | 0,3':330 | 18':340 | 4,8':340 | 9,5':350 |
| | 20':340 | 1,7':310 | 1,4':330 | | | |
| Validation | OK | NOT OK | NOT OK | OK | OK | OK |

This result demonstrates the increase in endurance performance at very high speed induced by the presence of offset foam associated with an asymmetric sculpture during tests under negative camber.

This result is attained in conserving a good performance while limiting cavity resonance.

With the tires as described, it is understood that a direction of mounting the tires on the vehicle is predetermined by the manufacturer. The tires have an outer axial edge and an inner axial edge, with the inner axial edge being the edge to be mounted next to the vehicle body when the tire is mounted on the vehicle in the predetermined mounting direction and inversely for the outer axial edge. The addition of foam strips in the described tires results in differences in the speed limit of these tires as a function of the direction of mounting on the vehicle. It is therefore advisable to give users the means to avoid mistakes in the direction of installation of the foam and the direction of mounting of the tire on the rim, and then to verify that the direction of mounting imposed on the rim has been respected. As used herein, "outer side of the vehicle" designates the outer axial edge.

Although the dampers are shown with a generally rectangular cross-section, other cross-sectional geometries may be employed. For example, geometries having a greater base width, such as trapezoids and triangles.

While one tire may benefit from a single foam strip as described, another tire may benefit from two, three or more foam strips that function as the noise dampers. Both embodiments of the tire are influenced by the overall tread pattern of the asymmetrical tread and at least one off-center noise damper in the tire cavity.

## Claims

1. A pneumatic tire (300) for a vehicle, said tire being intended to be mounted on wheel mounting rims of the vehicle and having a predetermined mounting direction on the vehicle, wherein an inner side of the tire (P_{INT}) corresponds to an inner axial side of the vehicle and an outer side of the tire (P_{EXT}) corresponds to the outer side of the vehicle, said tire (300) comprising a summit with a tread (312) having asymmetric tread elements for contacting the ground, and the tire (300) being provided with a sealed inner liner that defines a cavity of the tire when the tire is mounted on a mounting rim, wherein a first noise damper (330) is circumferentially affixed to an inner surface (300a) facing the cavity of the tire (300), the first noise damper (330) being positioned in the cavity of the tire (300) toward an outer side of the tire (300) and being off-center relative to a median plane (C₃₀₀) of the tire (300), and a second noise damper (332) is circumferentially affixed to the inner surface (300a) facing the cavity of the tire (300), the second noise damper (332) being positioned in the cavity of the tire (300) towards an inner side of the tire (300) and being off-center relative to a median plane (C₃₀₀) of the tire (300), and the second noise damper (332) being affixed axially externally relative to the median plane of the tire;
wherein the center of gravity of the set of noise dampers (330, 332) is located toward the outer side of the tire; the tire being **characterised in that**:
each noise damper (330, 332) comprises a foam strip that is circumferentially affixed to the inner surface (300a) of the tire (300) facing the cavity of the tire (300), and each foam strip has a continuous length, and each foam strip has a continuous width (L₃₃₀, L₃₃₂) and a continuous thickness (E₃₃₀, E₃₃₂) over the entire continuous length of the foam strip;
wherein the tread (312) comprises a plurality of circumferential grooves, including primary grooves (318, 318') having respective widths (L₃₁₈, L_{318'}), an inner groove (320) closer to the inner side of the tire (300) and having a width (L₃₂₀), and an outer groove (322) closer to the outer side of the tire (300) having a width (L₃₂₂); and the width (L₃₂₀) of the inner groove (320) and the width (L₃₂₂) of the outer groove (322) are different from each other and are also different from the widths (L₃₁₈, L_{318'}) of the primary grooves (318, 318') such that the tread (312) has tread elements that are asymmetric with respect to the median plane (C₃₀₀) of the tire (300);
wherein the first noise damper (330) is disposed axially directly facing radially opposite the primary groove (318') as well as the outer groove (322), and the second noise damper (332) is disposed axially directly facing radially opposite the inner groove (320); and
wherein an axially inner edge (330a) of the first damper (330) coincides with a line (X) passing through a point of intersection between a base and a wall of the primary groove (318').

2. The pneumatic tire (300) according to claim 1, wherein the first noise damper (330) is affixed axially externally relative to the median plane of the tire.

3. The pneumatic tire according to claim 1, wherein the second noise damper (332) is aligned along a line (Y) that passes through a center of gravity of the second noise damper (332) and in the middle of the width (L₃₂₀) of the inner groove (320).

4. The pneumatic tire according to any one of claims 1 to 3, wherein the noise dampers (330, 332) are disposed axially internally relative to lateral ends of reinforcements of a summit block of the tire.

5. The pneumatic tire of claim 4, wherein a distance between the edges of the noise dampers (330, 332) and the lateral ends of the reinforcements of the summit block is greater than 25mm.

## Patentansprüche

1. Luftreifen (300) für ein Fahrzeug, wobei der Reifen dazu bestimmt ist, auf Radmontagefelgen des Fahrzeugs montiert zu werden und eine festgelegte Montagerichtung am Fahrzeug aufweist, wobei die Innenseite des Reifens (P_{INT}) einer axialen Innenseite des Fahrzeugs entspricht und eine Außenseite des Reifens (P_{EXT}) der Außenseite des Fahrzeugs entspricht, wobei der Reifen (300) einen Scheitelpunkt mit einer Lauffläche (312) umfasst, der asymmetrische Laufflächenelemente zur Bodenberührung aufweist, und wobei der Reifen (300) mit einer abgedichteten Innenauskleidung versehen ist, die einen Hohlraum des Reifens definiert, wenn der Reifen auf einer Montagefelge montiert ist, wobei eine erste Geräuschdämpfung (330) umlaufend an der Innenfläche (300a), dem Hohlraum des Reifens (300) zugewandt, befestigt ist, wobei die erste Geräuschdämpfung (330) im Hohlraum des Reifens (300) zur Außenseite des Reifens (300) hin angeordnet ist und in Bezug zu einer Mittelebene (C₃₀₀) des Reifens (300) exzentrisch angeordnet ist, und eine zweite Geräuschdämpfung (332) umlaufend an der Innenfläche (300a), dem Hohlraum des Reifens (300) zugewandt, befestigt ist, wobei die zweite Geräuschdämpfung (332) im Hohlraum des Reifens (300) zur Innenseite des Reifens (300) hin angeordnet ist und in Bezug zu einer Mittelebene (C₃₀₀) des Reifens (300) exzentrisch angeordnet ist, und wobei die zweite Geräuschdämpfung (332) in Bezug zur Mittelebene des Reifens axial außerhalb befestigt ist;
wobei sich der Schwerpunkt der Geräuschdämpfung (330, 332) zur Außenseite des Reifens hin befindet;
wobei der Reifen **dadurch gekennzeichnet ist, dass**:
jede Geräuschdämpfung (330, 332) einen Schaumstoffstreifen umfasst, der umlaufend an der Innenfläche (300a) des Reifens (300), dem Hohlraum des Reifens (300) zugewandt, befestigt ist, und wobei jeder Schaumstoffstreifen eine durchgehende Länge aufweist und jeder Schaumstoffstreifen eine durchgehende Breite (L₃₃₀, L₃₃₂) und eine durchgehende Stärke (E₃₃₀, E₃₃₂) über die gesamte durchgehende Länge des Schaumstoffstreifens aufweist;
wobei die Lauffläche (312) mehrere umlaufende Nuten umfasst, einschließlich primärer Nuten (318, 318'), die entsprechende Breiten (L₃₁₈, L_{318'}) aufweisen, einer Innennut (320), die näher an der Innenseite des Reifens (300) liegt und eine Breite (L₃₂₀) aufweist, und einer Außennut (322), die Näher an der Außenseite des Reifens (300) liegt und eine Breite (L₃₂₂) aufweist; und wobei sich die Breite (L₃₂₀) der Innennut (320) und die Breite (L₃₂₂) der Außennut (322) voneinander unterscheiden und sich außerdem derart von den Breiten (L₃₁₈, L_{318'}) der primären Nuten (318, 318') unterscheiden, dass die Lauffläche (312) Laufflächenelemente aufweist, die in Bezug zur Mittelebene (C₃₀₀) des Reifens (300) asymmetrisch sind;
wobei die erste Geräuschdämpfung (330) axial direkt der primären Nut (318') sowie der Außennut (322) radial entgegengesetzt zugewandt angeordnet ist und die zweite Geräuschdämpfung (332) axial direkt der Innennut (320) radial entgegengesetzt zugewandt angeordnet ist; und
wobei eine axiale Innenkante (330a) der ersten Dämpfung (330) mit einer Linie (X) zusammenfällt, die durch einen Schnittpunkt zwischen einer Basis und einer Wand der primären Nut (318') verläuft.

2. Luftreifen (300) nach Anspruch 1, wobei die erste Geräuschdämpfung (330) in Bezug zur Mittelebene des Reifens axial außerhalb befestigt ist.

3. Luftreifen nach Anspruch 1, wobei die zweite Geräuschdämpfung (332) entlang einer Linie (Y) ausgerichtet ist, die durch den Schwerpunkt der zweiten Geräuschdämpfung (332) und in der Mitte der Breite (L₃₂₀) der Innennut (320) verläuft.

4. Luftreifen nach einem der Ansprüche 1 bis 3, wobei die Geräuschdämpfung (330, 332) in Bezug zu den lateralen Enden von Verstärkungen eines Scheitelblocks des Reifens axial innerhalb angeordnet sind.

5. Luftreifen nach Anspruch 4, wobei der Abstand zwischen den Kanten der Geräuschdämpfung (330, 332) und den lateralen Enden der Verstärkungen des Scheitelblocks größer als 25 mm ist.

## Revendications

1. Un pneumatique (300) destiné à un véhicule, ledit pneumatique étant destiné à être monté sur des jantes de montage de roue du véhicule et ayant une direction de montage prédéterminée sur le véhicule, dans lequel un côté intérieur du pneumatique (P_{INT}) correspond à un côté axial intérieur du véhicule et un côté extérieur du pneumatique (P_{EXT}) correspond au côté extérieur du véhicule, ledit pneumatique (300) comprenant un sommet avec une bande de roulement (312) avec des éléments de sculpture asymétriques destinés à venir en contact avec le sol, et le pneumatique (300) étant muni d'une gomme intérieure étanche qui définit une cavité du pneumatique lorsque le pneumatique est monté sur une jante de montage, dans lequel un premier amortisseur de bruit (330) est fixé de manière circonférentielle à une surface intérieure (300a) qui fait face à la cavité du pneumatique (300), le premier amortisseur de bruit (330) étant positionné dans la cavité du pneumatique (300) vers un côté extérieur du pneumatique (300) et étant décentré par rapport à un plan médian (C₃₀₀) du pneumatique (300), et un deuxième amortisseur de bruit (332) est fixé de manière circonférentielle à la surface intérieure (300a) qui fait face à la cavité du pneumatique (300), le deuxième amortisseur de bruit (332) étant positionné dans la cavité du pneumatique (300) vers un côté intérieur du pneumatique (300) et étant décentré par rapport à un plan médian (C₃₀₀) du pneumatique (300), et le deuxième amortisseur de bruit (332) étant fixé axialement extérieurement relativement au plan médian du pneumatique ;
dans lequel le centre de gravité de l'ensemble des amortisseurs de bruit (330, 332) est situé du côté extérieur du pneumatique ;
le pneumatique étant **caractérisé en ce que** ;
chaque amortisseur de bruit (330, 332) comprend une bande de mousse qui est fixé de manière circonférentielle à la surface intérieure (300a) du pneumatique (300) qui fait face à la cavité du pneumatique (300), et chaque bande de mousse comporte une longueur continue, et chaque bande de mousse comporte une largeur continue (L₃₃₀, L₃₃₂) et une épaisseur continue (E₃₃₀, E₃₃₂) sur toute la longueur continue de la bande de mousse ;
la bande de roulement (312) comprend plusieurs rainures circonférentielles, y compris des rainures primaires (318, 318') ayant des largeurs respectives (L₃₁₈, L_{318'}), une rainure intérieure (320) plus proche du côté intérieur du pneumatique 300 et ayant une largeur (L₃₂₀), et une rainure extérieure (322) plus proche du côté extérieur du pneumatique (300) ayant une largeur (L₃₂₂) ; et
la largeur (L₃₂₀) de la rainure intérieure (320) et la largeur (L₃₂₂) de la rainure extérieure (322) sont différentes l'une de l'autre et sont différentes aussi des largeurs (L₃₁₈, L_{318'}) des rainures primaires (318, 318') de telle sorte que la bande de roulement (312) comporte des éléments de sculpture asymétriques par rapport au plan médian (C₃₀₀) du pneumatique (300) ;
dans lequel le premier amortisseur de bruit (330) est disposé axialement directement en regard radialement de la rainure primaire (318') ainsi que de la rainure extérieure (322), et le deuxième amortisseur de bruit (332) est disposé axialement directement en regard radialement de la rainure intérieure (320) ; et
dans lequel le bord (330a) axialement intérieur du premier amortisseur (330) coïncide avec une ligne (X) qui passe par un point d'intersection entre une base et une paroi de la rainure primaire (318').

2. Le pneumatique (300) selon la revendication 1, dans lequel le premier amortisseur de bruit (330) est fixé axialement extérieurement relativement au plan médian du pneumatique.

3. Le pneumatique selon la revendication 1, dans lequel le deuxième amortisseur de bruit (332) est aligné le long d'une ligne (Y) qui passe par le centre de gravité du deuxième amortisseur de bruit (332) et au milieu de la largeur (L₃₂₀) de la rainure intérieure (320).

4. Le pneumatique selon l'une quelconque des revendications 1 à 3, dans lequel les amortisseurs de bruit (330, 332) sont disposés axialement intérieurement relativement aux extrémités latérales des renforts du bloc sommet du pneumatique.

5. Le pneumatique selon la revendication 4, dans lequel la distance entre les bords des amortisseurs de bruit (330, 332) et les extrémités latérales des renforts du bloc sommet est supérieure à 25mm.
